# EUROPEAN PATENT APPLICATION

(11) **EP 1 197 887 A1**
(43) Date of publication of application: **17.04.2002**
(21) Application number: 00121372.7
(22) Date of filing: 11.10.2000
(51) Int. Cl.: G06F 17/60

(54) **Computer system and method for hedging a currency exchange rate risk**

(71) Applicant: UBS AG, 8001 Zürich (CH)
(72) Inventor: Meier, Gerhard, 6312 Steinhausen (CH)
(74) Representative: Schmidt, Steffen J., Dipl.-Ing.

(57) **Abstract**

The invention relates to a computer system and a method for hedging a currency exchange rate risk associated with a primary transaction of an exchange traded item. The computer system (100) comprises means (110) for executing the primary transaction, the primary transaction having a transaction value, means (112) for receiving a currency change rate, means (116) for determining a hedging price based at least on the currency exchange rate, a hedging period and the transaction value or a fraction of the transaction value, and means (108) or outputting a hedging offer, the hedging offer comprising at least the hedging price.

## Description

### BACKGROUND OF THE INVENTION

### Technical Field

The invention relates to a computer system and a method for hedging a currency exchange rate risk associated with a transaction of an exchange traded item.

### Discussion of the Prior Art

With the help of computer systems, a user like an investor or an investor's agent can access a market of exchange traded items for purchasing or selling exchange traded items such as stocks, bonds, stock options, futures options, financial instruments, etc. Computer systems for accessing a market of exchange traded items usually comprise means for receiving and outputting user information which are in communication with a user terminal. Moreover, such computer systems comprise means for executing a transaction of an exchange traded item. The means for executing a transaction include trading means for managing the transaction and an exchange interface in communication with the market of exchange traded items such as a stock exchange.

The user may start a transaction of an exchange traded item by inputting a user request related to a current price of a particular exchange traded item to be purchased or sold. Upon receipt of the user request, the computer system requests a corresponding price from the market of exchange traded items via the exchange interface. The computer systems then outputs the price received via the exchange interface to the user via the means for receiving and outputting user information. If the user decides to purchase or sell the particular exchange traded item on the basis of its current price, the user inputs a execution request comprising at least the volume of the transaction, e.g., the amount of shares of a specific company to be purchased or sold. This execution request is input via the user terminal and received by the means for receiving and outputting user information. Thereafter, the trading means access the market of exchange traded items via the exchange interface in order to execute a transaction related to the execution request. After execution of the transaction, a position of a particular exchange traded item is created or settled.

It is well-known that transactions of exchange traded items can be subject to a currency exchange rate risk. This is usually the case if the currency of the market that sets the price of the exchange traded item differs from e.g. the currency of the investor's domestic market. For example, if a Japanese investor purchases 100 shares of XYZ corporation trading on the NASDAQ for 10 dollars a share, the transaction would cost the investor 100.000 yen, assuming the exchange rate was 100 yen to the dollar at the time of the transaction. If the investor decides to sell the shares of XYZ corporation at a time when the exchange rate is 95 yens to the dollar, the investor would incur a 5% loss associated with the fluctuation in the exchange rate.

There are existing financial instruments for protecting against foreign exchange (FX) risks. For example, a buyer of a FX call option has the right to purchase a specified amount of foreign currency at a specified exchange rate at a specified time. In retail banking for average customers, however, FX options are unsuitable for eliminating exchange rate risks associated with a position created by a transaction of an exchange traded item for several reasons. First, the use of FX options would add a layer of complexity to a transaction of the exchange traded item by requiring the investor to be familiar with option investing and the use of calls and puts to hedge a position. Also, FX options are typically for fixed amounts of currency and do not generally match the amount of currency risk associated with a typical transaction of an exchange traded item. Furthermore, the strike prices of FX options for a particular currency pair are predefined by the FX market makers and will often not match the exact exchange rate at the time the specific transaction of the exchange traded item took place. In addition, and depending on the geographical location of the investor, FX options are often "European style" where the premium does not strictly follow the exchange rate movements so that only partial protection is achieved. Also, European style options can only be exercised at expiry so they are not useful for protecting a specific position that may be terminated by the investor at any time. Finally, FX options are not easily purchased on-line, therefore, investors will have to undergo a potentially time consuming process when purchasing an FX option.

Another technique for hedging exchange rate risks is the purchase of currency certificates. However, currently traded currency certificates also require the investor to fully understand the product in order to choose the most suitable currency certificate. Moreover, currency certificates have standard certificate amounts that usually do not match the volume of a transaction of an exchange traded item and predefined strike levels that do not match the exchange rate at the time the transaction is executed. Like FX options, currency certificates are not easily selected on-line so that investors will have to undergo a potentially time consuming process when purchasing a currency certificate.

Summarizing, the exchange rate risk associated with a position of an exchange traded item can not be hedged easily by non-professional investors partially due to the complex and time consuming process of purchasing a currently available financial instrument like an FX option or a currency certificate for protecting against exchange rate risks. There is, therefore, a need for a computer system and the method for easily and quickly hedging a currency exchange rate risk associated with a particular position of an exchange traded item.

### SUMMARY OF THE INVENTION

The present invention is directed to overcoming the drawbacks of the prior art and satisfies the existing need by providing a computer system comprising means for executing a primary transaction of an exchange traded item, the primary transaction having a transaction volume, means for receiving a currency exchange rate, means for determining a hedging price based at least on the currency exchange rate, a hedging period and the transaction volume or a fraction thereof, and means for outputting a hedging offer, a hedging offer comprising at least the hedging price. A method for hedging a currency exchange rate risk according to the invention comprises executing a primary transaction of an exchange traded item, the primary transaction having a transaction volume, receiving a currency exchange rate, determining the hedging price based on at least the currency exchange rate, a hedging period and the transaction volume or a fraction thereof and outputting the hedging offer, the hedging offer comprising at least the hedging price. According to the invention, the hedging offer which includes the hedging price is preferably output in context with a particular primary transaction of an exchange traded item, e.g., immediately after an investor requests from the computer system to execute a particular primary transaction.

The hedging period, i.e., the period for which protection against the exchange rate risk is sought or granted, can be standardized, user-determined or pre-determined by the computer system. In case the hedging period is not pre-determined by the computer system, the computer system preferably comprises means for receiving a hedging period. The means for receiving the hedging period may be in communication with the market for exchange traded items for receiving standardized hedging periods or with a user terminal for receiving a user-defined hedging period.

In an exemplary embodiment of the invention, the computer system further comprises means for executing a secondary transaction of the exchange rate risk. The secondary transaction of the exchange rate risk takes place preferably automatically after the hedging offer including the hedging price is accepted by the user. In most cases the hedging price will be identical with the total cost of the secondary transaction for the investor.

Preferably, the secondary transaction automatically takes place in the background such that the detailed mechanisms of the secondary transaction remain "invisible" for the investor. It is therefore not necessary that the investor understands the secondary transaction as such. The investor only needs to know that the exchange rate risk associated with a particular primary transaction will be eliminated if the investor accepts the hedging offer.

The secondary transaction may have the form of an agreement between the investor and e.g. a financial institution according to which the financial institution is willing to carry the exchange rate risk associated with a particular primary transaction and the investor is willing to pay the hedging price to the financial institution in return. On the other hand, the secondary transaction may also relate to an exchange traded item like a special financial instrument suited for compensating the exchange rate risk associated with a particular primary transaction.

The secondary transaction can relate to both exchange traded items and so-called non-tradable items which can not be traded. The secondary transaction can e.g. be based on a so-called over-the-counter (OTC) financial instrument, which is specifically tailored according to a plurality of parameters like a user-determinable hedging period. Such OTC instruments are normally non-tradable and may thus be linked to the item of the primary transaction as will be described below. On the other hand, the secondary transaction can also be based on a financial instrument standardized e.g. in regard to a hedging period and broken down to a small standardized currency amount like one dollar or ten dollars.

The computer system may comprise several interfaces for enabling the transfer of information between the computer system and its environment. The means for receiving the currency exchange rate, e.g., may include a rate interface in communication with an exchange rate data source. The exchange rate data source can provide real-time exchange rates, which form the basis for determining the hedging price. Moreover, the means for executing the transaction may comprise an exchange interface in communication with the market for exchange traded items. The exchange interface is adapted to at least receive real-time prices of exchange traded items. In addition, the means for outputting the hedging price may comprise a user interface for outputting and receiving user information. The user interface is preferably in communication with an external user terminal. The user terminal can be operated by an investor's agent or directly by the investor.

According to a further embodiment, the computer system of the present invention also comprises database means for storing transaction information relating to each executed primary transaction. Additionally, the transaction information can comprise information relating to a subsequent secondary transaction.

When a hedged position of a particular exchange traded item is settled (e.g. when previously purchased shares of a specific company are sold), the current exchange rate has to be examined to find out if the investor incurred an exchange rate loss. The computer system may thus further comprise first comparison means which, upon settlement of the hedged position, compare an exchange rate stored upon execution of the primary transaction with a current exchange rate provided by the means for receiving the exchange rate.

Should the first comparison means determine that the current exchange rate is less than the stored exchanged rate, a compensation amount may be calculated based on a difference between the stored exchange rate and the current exchange rate. The calculation can further be based on the hedged value of the decision. In addition to the first comparison means the computer system thus preferably comprises means for calculating the compensation amount. Since the investor may not only receive the profits from the a settled primary transaction but also the compensation amount, an exchange rate loss associated with the depreciation of the exchange rate is compensated.

When the hedging period has lapsed prior to settlement of the primary transaction, the exchange rate risk associated with the position created by the primary transaction is no longer hedged. To enable a continuous hedging of the position ("roll-over"), the computer system may comprise time measuring means for measuring a lapsed portion of the hedging period. The time measuring means may communicate with the means for outputting the hedging offer such that a further hedging offer including a newly determined hedging price is output if the lapsed portion of the hedging period exceeds a first threshold. If, e.g., initially a hedging period of three months was selected by the investor, a further hedging offer may be output two weeks prior to the end of this three months period.

During the hedging period the value of a hedged position, i.e., the price of the exchange traded item subject to the primary transaction, may appreciate. Consequently, a difference may exist between the current value of the position and the hedged value. In order to give the investor the option to also hedge the appreciated value of the position, the computer system preferably further comprises second comparison means which compare a price in the foreign currency of the exchange traded item stored upon execution of the primary transaction with its current price. The second comparison means may further or alternatively compare the current value in the foreign currency of the hedged position with the value of the position when the primary transaction was executed.

The second comparison means communicate with the means for outputting the hedging offer such that a further hedging offer based on a newly determined hedging price is output e.g. if the calculated difference exceeds a second threshold. Preferably, the difference between the stored price of the exchange traded item and the current price or the stored value of the position and the current value is only monitored during the hedging period.

As already mentioned above, the user interface of the computer system may be in communication with a user terminal for hedging the exchange rate risk associated with the primary transaction. The user terminal may have a plurality of user communication fields allowing to receive and output information which is transmitted via the user interface. The plurality of user communication fields may comprise a transaction field for entering transaction information based on which the primary transaction is executed and a confirmation field for outputting a hedging price determined based at least on a current exchange rate, a hedging period and the transaction value or a fraction of the transaction value. If the hedging period is user-determinable, the user terminal can further comprise a hedging field for entering a hedging request, the hedging request comprising at least the hedging period.

### BRIEF DESCRIPTION OF THE DRAWINGS

Further aspects and advantages of the invention will become apparent upon reading the following detailed description of preferred embodiments of the invention and upon reference to the drawings, in which:
- Fig. 1: is a schematic diagram of the computer system of the present invention for hedging a currency exchange rate risk associated with a primary transaction of an exchange traded item; and
- Fig. 2 and 3: are flow charts of the method of the present invention for hedging a currency exchange rate risk associated with a primary transaction of an exchange traded item.

### DESCRIPTION OF THE PREFERRED EMBODIMENTS

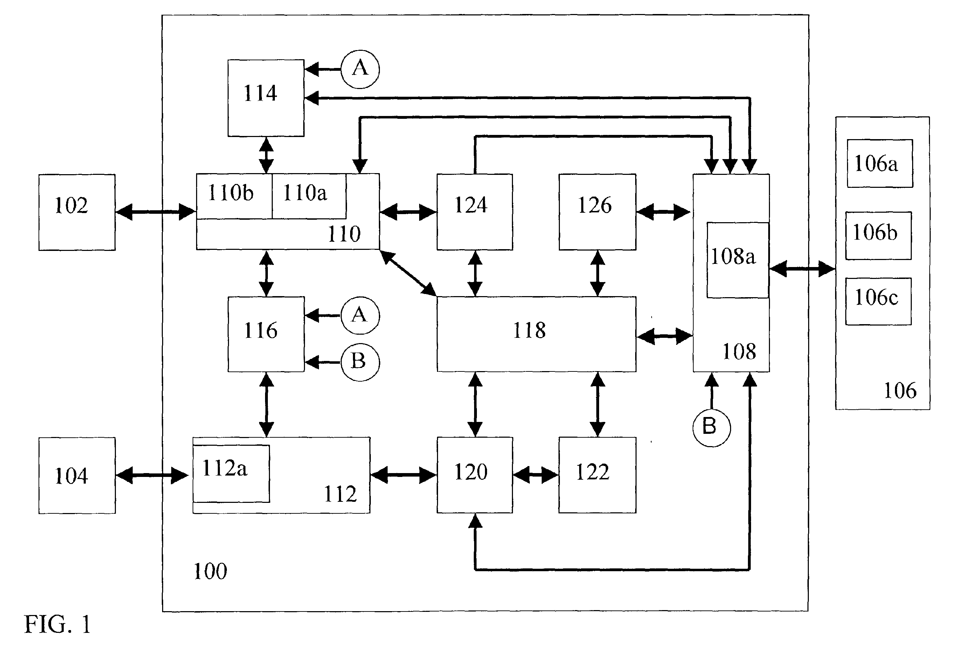

In Fig. 1 a block diagram of a computer system 100 according to the invention for hedging a currency exchange rate risk associated with a primary transaction of an exchange traded item is illustrated. In communication with the computer system 100 is a market 102 for exchange traded items through which the investor's primary transaction is executed, such as the New York stock exchange. Also in communication with the computer system 100 is an external exchange rate data source 104 for providing the computer system 100 with real-time exchange rate data. Furthermore, a user terminal 106, operated by, for example, an investor or the investor's agent, communicates with the computer system 100 for the purpose of executing primary transactions in particular exchange traded items. The user terminal 106 may be, by way of non-limiting example, a mobile telephone adapted to the Wireless Application Protocol (WAP) or a personal computer executing a software program designed to interact with the computer system 100. The user terminal 106 may communicate with the computer system 100 using any known method including, by not limited to, the Internet or dedicated communication lines.

The computer system 100 includes managing means 108 for managing interactions between the computer system 100 and the user terminal 106 including outputting information to the user terminal 106 and receiving information from the user terminal 106. The information which is output from the managing means 108 comprises at least a hedging offer which may be output in a close temporal relationship with a primary transaction relating to an exchange traded item. The managing means 108, therefore, constitute means for outputting a hedging offer.

The managing means 108 further comprise a user interface 108a through which user information is output and received. The user terminal 106 communicates with the managing means 108 through the user interface 108a. Via the user interface 108a the managing means 108 may receive a user-defined hedging period from the user terminal 106.

The computer system 100 also includes means 110 for executing the primary transaction. The means 110 for executing the primary transaction are in communication with the managing means 108 and comprise trading means 110a for managing the primary transaction requested by the user terminal 106 and an exchange interface 110b which enables communication between the means 110 for executing the primary transaction and the market 102 for exchange traded items. The means 110 for executing the primary transaction output to the market 102 execution requests received via the user interface 108a from the user terminal 106 and report to the user terminal 106, via the user interface 108a, trade confirmations received from market 102.

Also included in the computer system 100 are means 112 for receiving a currency exchange rate comprising a rate interface 112a. The means 112 for receiving an exchange rate communicate via the rate interface 112a with the exchange rate data source 104 which provides real-time exchange rate data.

The computer system 100 also comprises means 114 for executing a secondary transaction of the exchange rate risk associated with the primary transaction. The means 114 for executing the secondary transaction communicate at least with the means 110 for executing the primary transaction and the managing means 108.

In the following, hedging of the exchange rate risk associated with a primary transaction is illustrated by means of two exemplary secondary transactions which may both be executed by the means 114 for executing the secondary transaction.

A first exemplary secondary transaction which may be executed by the means 114 relates to a non-tradable FX put option "American style". Such an "American style" option can be exercised at any time before its maturity date. The FX option is preferably an OTC option, i.e., the option is tailored for a particular primary transaction and according to the specific needs of the investor in regard to e.g. a hedging period and a value of the primary transaction to be hedged. The OTC FX option is not tradable but linked to a particular position created by the primary transaction for the whole hedging period. Due to the linking, the OTC FX option is automatically settled when the hedged position is settled during the hedging period. Linking has the advantage that the investor does not need to understand the detailed mechanism and premium composition of the OTC FX option in order to hedge the exchange rate risk associated with the primary transaction.

A second exemplary secondary transaction which may be executed by the means 114 relates to tradable currency certificates of the bear type having standardized strike levels and standardized maturity dates but being broken down into e.g. one currency unit like one dollar. If an investor intends to hedge e.g. the exchange rate risk associated with a primary transaction having a transaction value of 14.320 dollars, the secondary transaction thus has a volume of 14.320 currency certificates, each currency certificate allows the sale of one dollar at the maturity date with a specific exchange rate, i.e., the strike level. As mentioned above, currency certificates have standardized strike levels. The currency certificate for purchase depends on the current exchange rate. Generally, currency certificates having a strike level close to the current exchange rate are automatically chosen by the computer system 100. The cost of a currency certificate having a particular maturity date and a particular strike level depends on the current exchange rate. Since currency certificates are generally tradable, linking between the position of the primary transaction and the position of the secondary transaction of currency certificates is not required. In other words: The currency certificates may be sold by the investor independently from the exchange traded item of the primary transaction.

The computer system 100 further comprises means 116 for determining the price for hedging the exchange rate risk associated with a specific primary transaction. The means 116 for determining the hedging price communicate with the managing means 108, with the means 110 for executing the primary transaction, with the means 112 for receiving an exchange rate and with the means 114 for executing the secondary transaction.

The means 116 determine the hedging price upon receipt of a corresponding hedging request from the investor via the means 108 for managing interactions between the computer system and the user terminal 106. The determination of the hedging price depends on the specific secondary transaction. The computer system 100 may allow a user selection among several different secondary transactions or may restrict hedging of an exchange rate risk associated with a primary transaction to a particular secondary transaction.

If the secondary transaction relates to OTC FX options, the cost of hedging a primary transaction, i.e., the price of the OTC FX option, depends on the hedging period, the value of the primary transaction to be hedged and the exchange rate when the primary transaction is executed. Upon execution of a primary transaction, the means 116 for determining the hedging price thus receive the current exchange rate from the exchange rate data source 104 via the means 112 for receiving the exchange rate and the value of the primary transaction from the means 110 for executing the primary transaction. Moreover, the means 116 receive a user-selected hedging period and - if desired - a fraction of the transaction value to be hedged from the user terminal 106 via the managing means 108. The means 116 then calculate the hedging price based on these parameters and send the calculated hedging price to the managing means 108, which then outputs a hedging offer comprising the calculated hedging price to the user terminal 108 via the user interface 108a.

On the other hand, if the secondary transaction relates to currency certificates broken down to a small currency unit, the cost of hedging the primary transaction depends on the value of the primary transaction as well as on the specific currency certificate chosen. Upon execution of the primary transaction, the means 116 determine the hedging price by selecting a suitable currency certificate based on the current exchange rate and by multiplying the price of a single selected currency certificate with the number of currency certificates required to hedge the transaction value or a user-selected fraction thereof. Since currency certificates have standardized strike levels, the specific currency certificate is selected by the means 116 for determining the hedging price, such that the difference between the available strike levels and a current exchange rate received from the exchange rate database means 104 via the means 112 for receiving the exchange rate is minimized. Since currency certificate have standardized maturity dates, the hedging period may not be freely selected by the investor. Instead, the means 116 for determining the hedging price send a hedging offer comprising several hedging prices relating to different maturity dates via user interface 108a of the managing means 108 to the user terminal 106. A user may then select a specific maturity date, i.e., hedging period, and a corresponding selection request of the user is transmitted from the user terminal 106 via the user interface 108a of the managing means 108 to the means 114 for executing the secondary transaction. Since the selected currency certificates may be tradable, the means 114 for executing the secondary transaction may purchase the selected currency certificate through the market 102 for exchange traded items via the trading means 110a of the means 110 for executing the primary transaction.

The computer system 100 comprises central database means 118 for storing all information relating to the primary or the secondary transaction. If necessary, the database means 118 may be accessed by all other components of the computer system 100. Transaction information stored in the database means 118 may relate to at least one of an identifier allowing identification of the exchange traded item, an amount of exchange traded items subject to the particular primary transaction, and the price of the exchange traded item when the primary transaction was executed. In case the hedging offer is accepted, the transaction information can also comprise hedging information. The hedging information can relate to at least one of a hedging flag indicating that a particular position of exchange traded items is hedged, a hedging period, an exchange rate at the time the primary transaction or a secondary transaction was executed, and information relating to an executed secondary transaction.

The computer system 100 also comprises first comparison means 120 in communication with the managing means 108, the means 112 for receiving the currency exchange rate and the database means 118. When the managing means 108 receive a settlement request from the user terminal 106 indicating that particular position is to be settled, e.g., previously purchased shares of a specific company which are be sold, the first comparison means 120 check whether this particular position is hedged and if the hedging period has already lapsed. If the hedging period has not already lapsed, the first comparison means 120 compare the exchange rate stored in the database means 118 at the time of the execution of the primary transaction with a current exchange rate received from the exchange rate data source 104 via the means 112 for receiving an exchange rate.

The further actions taken in case the first comparison means 120 determine that the current exchange rate is less than the stored exchange rate depend on the nature of the secondary transaction. If the exchange rate risk has been hedged with currency certificates, the currency certificates may automatically be sold when the position is settled. Since the value of the currency certificates has appreciated due to the depreciation of the exchange rate, the investor's exchange rate loss associated with settling the position is compensated by the exchange rate gain, which is associated with settling the secondary transaction.

On the other hand, if the exchange rate risk has been hedged with non-tradable OTC FX options issued by a financial institution, the financial institution has to compensate for the investor's exchange rate loss associated with the depreciation of the exchange rate. The computer system 100 thus further comprises means 122 for calculating a compensation amount which are in communication with the first comparison means 120 and the database means 118. The means 122 calculate the compensation amount based on the hedged value of the primary transaction and a difference between the exchange rate stored in the database means 118 at the time the primary transaction was executed and the current exchange rate received from the exchange rate data source 104 via the means 112 for receiving the exchange rate and the first comparison means 120.

When the value of a particular hedged position of exchange traded items appreciates during the hedging period, the difference between the value of the position at the time the primary transaction was executed and the current value of the position in the foreign currency is not hedged. The computer system 100 thus further comprises second comparison means 124 in communication with the managing means 108, the means 110 for executing the primary transaction and the database means 118.

The second comparison means 124 compare a price of the exchange traded item which was stored in the database means 118 when the primary transaction was executed with a current price of the exchange traded item received from the market 102 for exchanged traded items via the exchange interface 110a. Based on the amount of exchange traded items constituting a specific position and the difference between the stored price and the current price, the second comparison means 124 calculate the appreciated value in the foreign currency of the position. Should the appreciated value exceed a predetermined or user-determined threshold, the second comparison means 124 output a warning to the user terminal 106 via the user interface 108a of the managing means 108. The user is then prompted to either reject the warning or to input a further hedging request upon which a further hedging offer is made as described above. Alternatively, the warning may already comprise a further hedging offer with a newly determined hedging price. The new hedging price may be determined based upon the previous hedging period, a current exchange rate and the appreciated value of the position.

The computer system 100 also comprises time measuring means 126 in communication with the managing means 108 and the database means 118. The time measuring means 126 measure the portion of the hedging period that has already lapsed. Should the time measuring means 126 determine that the lapsed portion of the hedging period exceeds a predetermined or user-determined threshold, a roll-over request is output to the user terminal 106 via the user interface 108a of the managing means 108. The roll-over request may prompt the user to input a further hedging request. Alternatively, the roll-over request may be accompanied by a further hedging offer comprising a newly determined hedging price. The new hedging price may be determined based on the previous hedging period, the current exchange rate and the current value of the or the value of the position at the time the primary transaction was executed.

The user terminal 106 which communicates with the computer system 100 via the user interface 108a comprises a plurality of user communication fields 106a, 106b, 106c allowing to input and output information transmitted via the user interface 108a. The user communication fields 106a, 106b, 106c may be displayed in the form of a single or in the form of separate screen masks on a display device of the user terminal 106. The plurality of user communication fields comprises a transaction field 106a that allow the input of the transaction information related to the primary transaction. The transaction information input by the user can comprise information relating to which exchange traded item to be purchased or sold and the amount of exchange traded items to be purchased or sold. Moreover, via the transaction field 106a, the transaction value of the primary transaction is output and user may input a corresponding execution request in order to execute the primary transaction.

Prior to or immediately after the user inputs an execution request to execute the primary transaction, a hedging field 106b is displayed asking the user whether or not he wants to hedge the exchange rate risk associated with the primary transaction. If the user wishes to hedge the exchange rate risk, he is asked to input a hedging period and whether the whole value of the primary transaction or only a fraction thereof should be hedged. Based on this information the means 116 of the computer system 100 determine the hedging price which is output as a hedging offer to the user terminal 106 and which is displayed in a confirmation field 106c of the user terminal 106. The user may then either accept the hedging offer, ask for a further hedging offer based on a different hedging period or cancel.

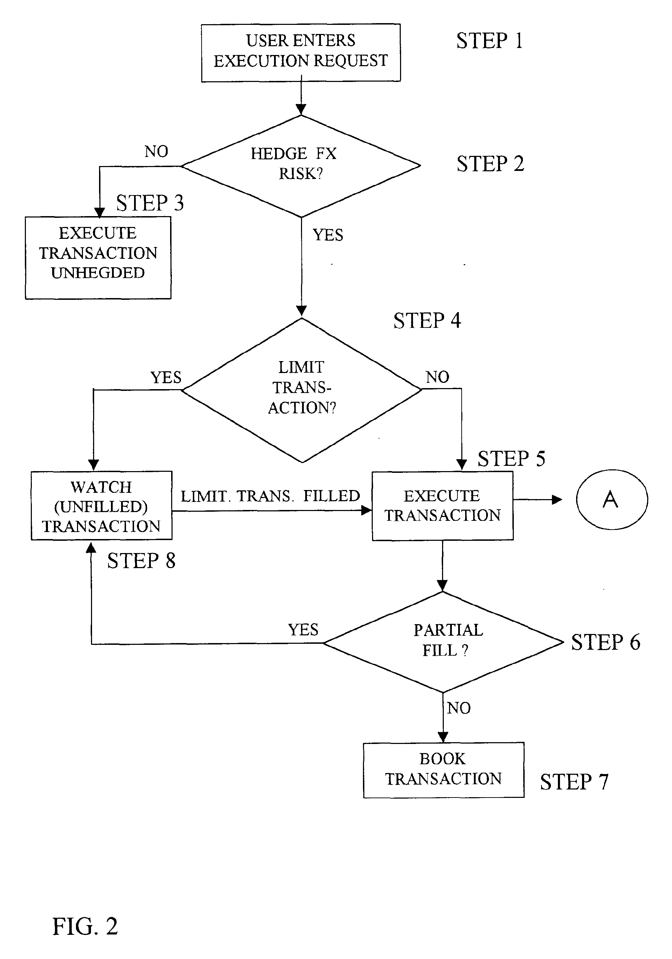

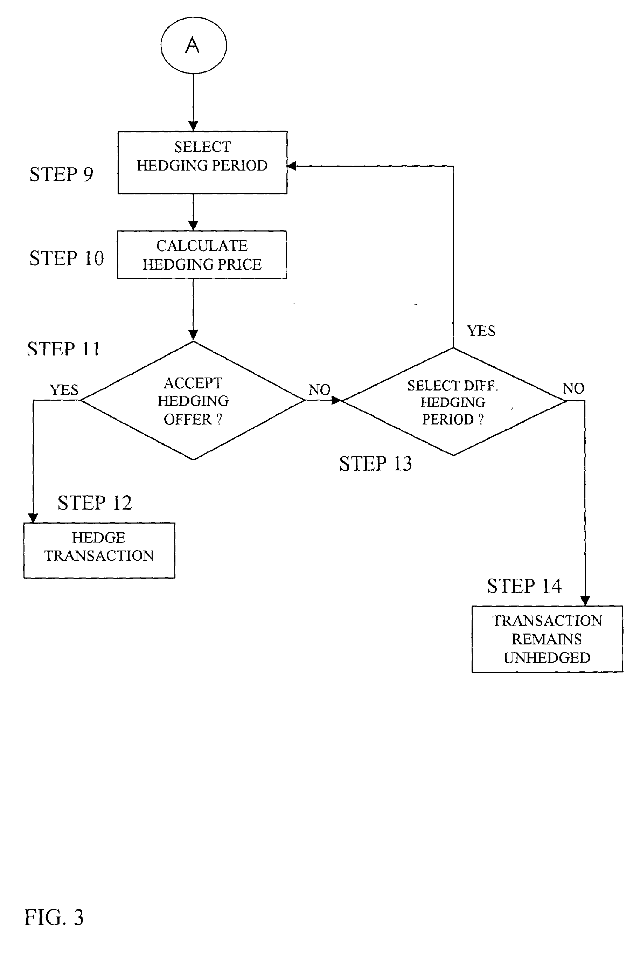

Referring now to figures 2 and 3, a method is shown for hedging a currency exchange rate risk associated with the primary transaction of an exchange traded item according to the present invention. Initially, in step 1, an execution request relating to a primary transaction, for example relating to the purchase of 100 shares of XYZ corporation, is input via the transaction field 106a of the user terminal 106 and received from computer system 100. Next, in step 2, the computer system 100 prompts the user via the hedging field 106b whether the exchange rate risk associated with the purchase is to be hedged. If the user declines to hedge the exchange rate risk, the user's execution request to purchase 100 shares of XYZ corporation is processed by the means 110 for executing the primary transaction, as in step 3, according to procedures that are well known in the art.

On the other hand, if the user indicates that he desires to hedge the exchange rate risk associated with the purchase, in step 4, the computer system 100 determines whether the execution request to purchase 100 shares of XYZ corporation was limited in regard to the price the investor is willing to pay for the shares. If the request was not limited, then in step 5 a request to purchase 100 shares of XYZ corporation is executed by the means 110 for executing a primary transaction. In step 6 it is then determined if the 100 share request was completed. If it was, then the primary transaction is booked in step 7.

If the execution request was limited, or if the execution request was only partially filled, then in step 8 the means 110 for executing the primary transaction watch the unfilled part of the execution request to determine when the pricing and availability of shares of XYZ corporation on the market 102 for exchange traded items is such that the unfilled part of the execution request may be filled. When that occurs, the method proceeds to step 5 where the unfilled part of the primary transaction is executed.

Referring now to figure 3, a method is shown for hedging the exchange rate risk associated with the primary transaction of 100 shares of XYZ corporation after a complete or after each partial fill in step 5. After a complete or a partial fill in step 5, the method proceeds to calculate a hedging price associated with the complete or partial fill. In step 9, the computer system 100 outputs via the managing means 108 a request to the user terminal 106 and prompts the investor to specify a hedging period for which the investor desires to hedge the exchange rate risk associated with the primary transaction. The user terminal 106 outputs this request via the hedging field 106b to the user and the user may input a hedging request comprising at least a specification of the hedging period. For example, if the investor expects to hold the shares of XYZ corporation for three months, then the investor may select a hedging period of three months.

Once the investor inputs a hedging request and selects a hedging period, in step 10 the means 116 for determining the hedging price calculate the cost for hedging the primary transaction based on the value of the purchased XYZ corporation shares, the exchange rate between the investor's home currency and the foreign currency in which the investor purchased the XYZ corporation shares and the hedging period.

Because the investor's single execution request to purchase 100 shares of XYZ corporation may be executed, e.g., in two 50 shares parts because of market conditions or because the investor limited his execution request, the hedging price must be calculated for each 50 share part separately based on the exchange rate at the time each part of the request was executed and the value of each part of the request. Once the hedging price is determined, in step 11, the computer system 100 outputs a hedging offer including the hedging price to the user terminal 106. The user terminal 106 then displays the hedging price in the confirmation field 106c.

If the investor chooses to hedge the exchange rate risk on the basis of the displayed hedging price, then in step 12 the hedging of the exchange rate risk associated with the purchase of XYZ corporation shares is put into effect. This can, e.g., be done by the secondary transaction of issuing an OTC FX option and linking this option to the particular position of XYZ corporation shares such that the OTC FX option can not be traded separately from the XYZ corporation shares.

If the investor determines that a different hedging period is more desirable, then the investor is given the opportunity, in step 13, to have the hedging price newly determined using the more desirable hedging period. If, however, the investor decides against hedging the primary transaction of XYZ corporation shares, then the method proceeds to step 14 in which case the primary transaction remains unhedged.

According to a further embodiment of the invention, the investor can not only limit the primary transaction but also the secondary transaction. Since a limited primary transaction may not be executed until several days after the user has input a request to execute the primary transaction, the hedging price at the time the primary transaction or a part thereof is executed may have changed, e.g. due to exchange rate fluctuations. An investor intending to hedge a limited primary transaction is therefore asked to specify not only a hedging period but also e.g. a price range for the hedging price he is willing to pay. Consequently, a limited primary transaction will only be hedged if the current hedging price at the time when the primary transaction is executed is within the price range specified by the investor. Otherwise, the primary transaction will remain unhedged.

As already described with reference to the time measuring means 126 of the computer system 100, the investor may accommodate a change in the hedging period in case he chooses not to sell the XYZ corporation shares within the hedging period previously specified. The computer system 100 notifies the investor, using any measured known in the art including, but not limited to, electronic mail, facsimile or telephone, that the originally selected hedging period is about to lapse investor as to whether hedging for an extended time period is desired. Alternatively, the investor himself may request from computer system 100 a longer hedging period.

Moreover, it may become necessary to increase the hedged value of the position of XYZ company shares if the value of this position appreciates after the purchase was made. As explained with reference to the second comparison means 124 of the computer system 100, the computer system 100 may again notify the investor and allow the investor to hedge the appreciated value of his position. Alternatively, the investor himself may request from computer system 100 to hedge the appreciated value of his position of XYZ company shares.

When the investor sells his position of XYZ company shares, he will receive the proceeds of the sale in his home currency based on the better of the exchange rate at the time of the purchase and the exchange rate at the time of the sale. For example, if the exchange rate at the time of the purchase was 100 yen to the dollar, and the exchange rate at the time of the sale was 110 yen to the dollar, then the investor (who is receiving the sale proceeds in yen) will receive the sale proceeds based on 110 yen to the dollar, as this is the higher exchange rate. In this case, because the exchange rate at the time of the sale was more favorable than the exchange rate at the time of the purchase, the hedging need not come into effect.

If, on the other hand, the exchange rate at the time of the sale is 95 yen to the dollar, then the investor will receive the sale proceeds based on 100 yen to the dollar, the exchange rate in effect at the time of the purchase. In this case, the investor uses the hedging benefits.

As has become apparent from the above, the invention also relates to a computer program with program code means for carrying out the steps of the method according to the present invention when the program is executed on a computer. The computer program with program code means can be stored on a computer-readable recording medium. Moreover, although the present invention was described with reference to figures 2 and 3 with respect to hedging a purchase of shares of a specific company, it will be obvious to one of ordinary skills in the art that the present invention may also apply to the case where the investor purchases a different exchange traded item like a financial instrument. Also, the invention may apply to purchasing an exchange traded item short with the intent of purchasing the exchange traded item in the future time.

## Claims

1. A computer system (100) for hedging a currency exchange rate risk associated with a primary transaction of an exchange traded item, wherein the computer system comprises
- means (110) for executing the primary transaction, the primary transaction having a transaction value;
- means (112) for receiving a currency exchange rate;
- means (116) for determining a hedging price based at least on the currency exchange rate, a hedging period and the transaction value or a fraction of the transaction value; and
- means (108) for outputting a hedging offer, the hedging offer comprising at least the hedging price.

2. The computer system according to claim 1, further comprising means (108) for receiving the hedging period.

3. The computer system according to claim 1 or 2, further comprising means (114) for executing a secondary transaction of the exchange rate risk.

4. The computer system according to one of claims 1 to 3, wherein the means (112) for receiving the currency exchange rate comprise a rate interface (112a) in communication with an exchange rate data source (104).

5. The computer system according to one of claims 1 to 4, wherein the means (110) for executing the transaction comprise an exchange interface (110b) in communication with a market (102) for exchange traded items.

6. The computer system according to one of claims 1 to 5, wherein the means (108) for outputting the hedging price comprise a user interface (108a) for outputting and receiving user information, the user interface (108a) being in communication with a user terminal (106).

7. The computer system according to one of claims 1 to 6, further comprising database means (118) for storing transaction information relating to an executed primary transaction.

8. The computer system according to one of claims 1 to 7, further comprising first comparison means (120), wherein, upon execution of the primary transaction, the exchange rate is stored and, upon settlement of a position of exchange traded items created by the primary transaction, the first comparison means (120) compare the stored exchange rate with a current exchange rate.

9. The computer system according to claim 8, further comprising means (122) for calculating a compensation amount based on a difference between the stored exchange rate and the current exchange rate, the compensation amount being calculated if the current exchange rate is less than the stored exchange rate.

10. The computer system according to one of claims 1 to 9, further comprising time measuring means (126) for measuring a lapsed portion of the hedging period.

11. The computer system according to claim 10, wherein the means (108) for outputting the hedging offer output a further hedging offer if the lapsed portion of the hedging period exceeds a first threshold.

12. The computer system according one of claims 1 to 11, further comprising second comparison means (124), wherein, upon execution of the primary transaction, at least one of a price of the exchange traded item and a value of a position of exchange traded items is stored and the second comparison means (124) compare the stored price or value with a current price or value.

13. The computer system according to claim 12, wherein the means (108) for outputting the hedging offer output a further hedging offer if the difference between the current price or value and the stored price or value exceeds a second threshold.

14. A method for hedging a currency exchange rate risk associated with a primary transaction of an exchange traded item, wherein the method comprises the steps of:
- executing the primary transaction, the primary transaction having a transaction value;
- receiving a currency exchange rate;
- determining a hedging price based at least on the currency exchange rate, a hedging period and the transaction value or a fraction of the transaction value; and
- outputting a hedging offer, the hedging offer comprising at least the hedging price.

15. The method according to claim 14, further comprising receiving a hedging period.

16. The method according to claim 14 or 15, further comprising executing a secondary transaction of the exchange rate risk.

17. The method according to one of claims 14 to 16, further comprising storing at least the exchange rate at the time when the primary transaction is executed.

18. The method according to one of claims 14 to 17, further comprising storing transaction information relating to an executed primary transaction.

19. The method according to claim 17 or 18, further comprising comparing the stored exchange rate with a current exchange rate when a position of exchange traded items created by the primary transaction is settled.

20. The method according to claim 19, further comprising calculating a compensation amount if the current exchange rate is less than the stored exchange rate, the calculation being based on a difference between the stored exchange rate and the current exchange rate.

21. The method according to one of claims 14 to 20, further comprising measuring a lapsed portion of the hedging period.

22. The method according to claim 21, further comprising outputting a further hedging offer if the lapsed portion of the hedging period exceeds a first threshold.

23. The method according to one of claims 14 to 22, further comprising storing a price of the exchange traded item at the time when the primary transaction is executed and comparing a current price of the exchange traded item with the stored price.

24. The method according to claim 23, further comprising outputting a further hedging offer if the difference between the current price and the stored price exceeds a second threshold.

25. A computer program with program code means for performing the steps according to one of claims 14 to 24 when the program is executed on a computer.

26. The computer program with program code means according to claim 2 stored on a computer-readable recording medium.

27. A user terminal (106) for hedging a currency exchange rate risk associated with a primary transaction of an exchange traded item, the user terminal (106) being in communication with a user interface (108a) of a computer system (110) and having a plurality of user communication fields (106a, 106b, 106c) allowing to input and output information transmitted via the user interface (108a), wherein the plurality of user communication fields (106a, 106b, 106c) comprises:
- a transaction field (106a) for entering transaction information for executing the primary transaction, the primary transaction having a transaction value;
- a confirmation field (106c) for outputting a hedging price determined based at least on a current exchange rate, a hedging period and the transaction value or a fraction of the transaction value.

28. The terminal according to claim 27, further comprising a hedging field (106b) for entering a hedging request, the hedging request comprising at least the hedging period.
